(19) **Europäisches Patentamt / European Patent Office / Office européen des brevets**

(11) **EP 2 156 210 B1**

(12) **FASCICULE DE BREVET EUROPEEN**

(45) Date de publication et mention
de la délivrance du brevet:
**22.09.2010 Bulletin 2010/38**

(21) Numéro de dépôt: **08760729.7**

(22) Date de dépôt: **09.06.2008**

(51) Int Cl.:
***G01S 3/74*** *(2006.01)*

(86) Numéro de dépôt international:
**PCT/EP2008/057165**

(87) Numéro de publication internationale:
**WO 2008/155250 (24.12.2008 Gazette 2008/52)**

(54) **PROCÉDÉ D'ESTIMATION DES ANGLES D'ARRIVÉES DE SOURCES COHÉRENTES PAR UNE TECHNIQUE DE LISSAGE SPATIAL SUR UN RÉSEAU DE CAPTEURS QUELCONQUE**

VERFAHREN ZUR MESSUNG VON ANKOMMENDEN WINKELN KOHÄRENTER QUELLEN UNTER VERWENDUNG VON RAUMGLÄTTUNG IN EINEM BELIEBIGEN SENSORNETZWERK

METHOD FOR MEASURING INCOMING ANGLES OF COHERENT SOURCES USING SPACE SMOOTHING ON ANY SENSOR NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **08.06.2007 FR 0704113**

(43) Date de publication de la demande:
**24.02.2010 Bulletin 2010/08**

(73) Titulaire: **THALES**
**92200 Neuilly-sur-Seine (FR)**

(72) Inventeurs:
• **FERREOL, Anne**
**92000 Colombes (FR)**
• **BRUGIER, Jérémy**
**75020 Paris (FR)**
• **MORGAND, Philippe**
**91207 Athis-Mons (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
• WAX M ET AL: "Direction finding of coherent signals via spatial smoothing for uniform circular arrays" IEEE TRANSACTIONS ON ANTENNAS AND PROPAGATION, IEEE SERVICE CENTER, PISCATAWAY, NJ, US, vol. 42, no. 5, mai 1994 (1994-05), pages 613-620, XP002170562 ISSN: 0018-926X
• FRIEDLANDER B ET AL: "DIRECTION FINDING USING SPATIAL SMOOTHING WITH INTERPOLATED ARRAYS" IEEE TRANSACTIONS ON AEROSPACE AND ELECTRONIC SYSTEMS, IEEE SERVICE CENTER, PISCATAWAY, NJ, US, vol. 28, no. 2, 1 avril 1992 (1992-04-01), pages 574-586, XP000307762 ISSN: 0018-9251
• REDDY K M ET AL: "Analysis of interpolated arrays with spatial smoothing" SIGNAL PROCESSING, ELSEVIER SCIENCE PUBLISHERS B.V. AMSTERDAM, NL, vol. 54, no. 3, novembre 1996 (1996-11), pages 261-272, XP004015760 ISSN: 0165-1684

**Description**

L'invention concerne notamment un procédé permettant d'interpoler des vecteurs directeurs d'un réseau de capteurs quelconques en utilisant des fonctions modales omnidirectionnelles.

Elle concerne aussi un procédé et un système permettant, notamment, d'estimer des angles d'arrivée de sources cohérentes par une technique de lissage sur un réseau de capteurs quelconque.

Elle est utilisée, par exemple, dans tous les systèmes de localisation dans un contexte urbain où le canal de propagation est perturbé par un grand nombre d'obstacles comme les immeubles.

De manière générale, elle peut être utilisée pour localiser des émetteurs dans un contexte de propagation difficile, urbain, semi-urbain (aéroport), à l'intérieur des bâtiments, etc.

Elle peut aussi être utilisée dans des procédés d'imagerie médicale, pour localiser des tumeurs ou des foyers épileptiques.

Elle s'applique dans des systèmes de sondage pour la recherche minière et pétrolière dans le domaine sismique. Ces applications nécessitent des estimations d'angles d'arrivées avec des multi-trajets dans le milieu de propagation complexe de la croûte terrestre.

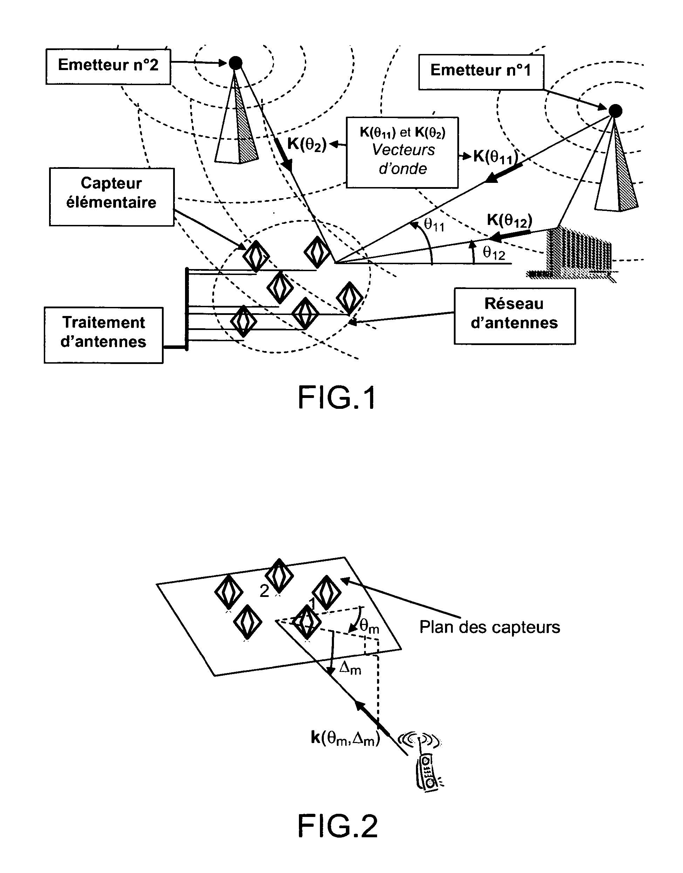

Le domaine technique est celui du traitement d'antennes qui traite les signaux de plusieurs sources émettrices à partir d'un système de réception multi-capteurs. Dans un contexte électromagnétique, les capteurs sont des antennes et les sources radioélectriques se propagent suivant une polarisation. Dans un contexte acoustique les capteurs sont des microphones et les sources sont sonores. La figure 1 montre qu'un système de traitement d'antennes est composé d'un réseau de capteurs recevant des sources avec des angles d'arrivées $\theta_{mp}$ différents. Le domaine est, par exemple, celui de la goniométrie qui consiste à estimer les angles d'arrivées des sources.

Les capteurs élémentaires du réseau reçoivent les sources avec une phase et une amplitude dépendant en particulier de leurs angles d'incidences et de la position des capteurs. Les angles d'incidences sont paramétrés en 1D par l'azimut $\theta_m$ et en 2D par l'azimut $\theta_m$ et l'élévation $\Delta_m$. D'après la figure 2, une goniométrie 1D est définie par des techniques qui estiment uniquement l'azimut en supposant que les ondes des sources se propagent dans le plan du réseau de capteurs. Lorsque la technique de goniométrie estime conjointement l'azimut et l'élévation d'une source il est question de goniométrie 2D.

Les techniques de traitement d'antennes ont pour objectif d'exploiter la diversité spatiale qui consiste à utiliser la position des antennes du réseau pour mieux utiliser les différences en incidence et distance des sources.

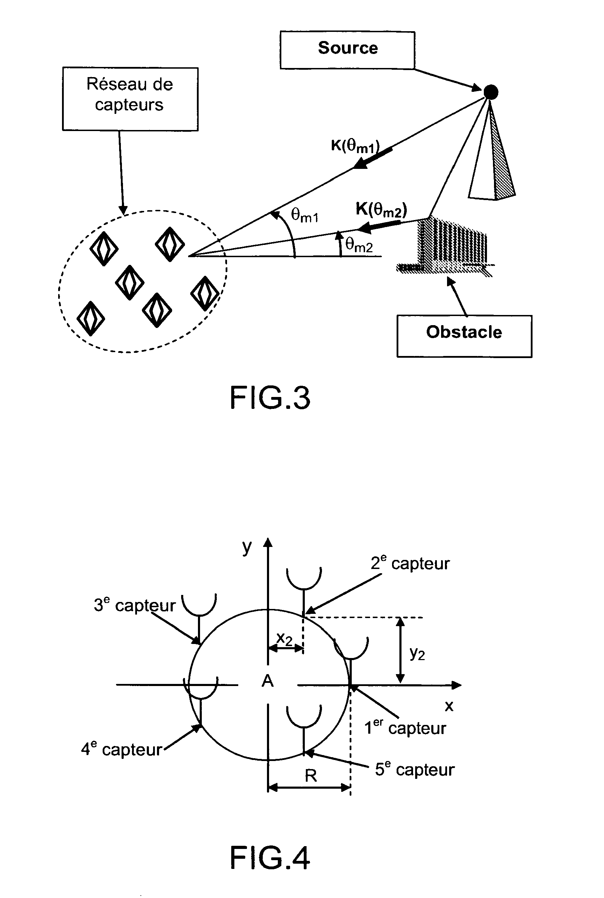

La figure 3 illustre une application à la goniométrie en présence de multi-trajets. La $m$-ième source se propage suivant $P$ trajets d'incidences $\theta_{mp}$ ($1 \leq p \leq P$) qui sont provoqués par $P$-1 obstacles dans l'environnement radioélectrique. Le problème traité dans le procédé selon l'invention est, notamment, le cas des trajets cohérents où l'écart de temps de propagation entre le trajet direct et un trajet secondaire est très inférieur à l'inverse de la bande du signal.

Le problème technique à résoudre est aussi celui de la goniométrie de trajets cohérents avec un coût de calcul réduit et un réseau de capteurs à géométrie quelconque.

Sachant que les techniques de goniométrie avec un coût de calcul réduit sont adaptées aux réseaux de capteurs linéaires equi-espacés, l'un des objectifs du procédé selon l'invention est de mettre en oeuvre ces techniques sur des réseaux de capteurs quelconques.

Les algorithmes permettant de traiter le cas des sources cohérentes sont, par exemple, les algorithmes du Maximum de Vraisemblance [2][3] qui sont applicables sur des réseaux de capteurs à géométrie quelconques. Toutefois ces algorithmes nécessitent des estimations multi-paramètres qui induisent une mise en oeuvre avec un coût de calcul élevé.

La technique du maximum de vraisemblance est adaptée aux cas des réseaux de capteurs linéaires équi-espacés par les méthodes IQML ou MODE [7][8]. Une autre alternative est celle des techniques de lissage spatial [4] [5] qui ont l'avantage de traiter les sources cohérentes avec un faible coût de calcul. Les techniques de goniométrie à faible coût de calcul adaptées aux réseaux linéaires sont soit la méthode ESPRIT [9][10] soit des techniques de type Root [11] [12] revenant à chercher les racines d'un polynôme.

Les techniques permettant de transformer des réseaux à géométrie quelconques en des réseaux linéaires sont décrites, par exemple, dans les documents [6] [5] [11]. Ces méthodes consistent à interpoler sur un secteur angulaire la réponse du réseau de capteurs à une source : Table de Calibration.

Le document de B. Friedlander et A. J. Weiss intitulé "Direction Finding using spatial smoothing with interpolated arrays", IEEE Transactions on Aerospace and Electronic Systems, Vol. 28, No. 2, pp. 574-587, 1992 divulgue un procédé qui consiste à :

- interpoler le réseau de capteur par un réseau linéaire dans un secteur angulaire déterminé avec une fonction d'interpolation non omnidirectionnel en azimut,
- décorréler les trajets par une technique de lissage spatial.

Cette technique, bien que performante présente comme inconvénients :

- De traiter le cas de sources cohérentes présentent dans le même secteur angulaire, donc de traiter un seul secteur angulaire ;
- D'interpoler avec une fonction non omnidirectionnelle en azimut.

L'invention concerne un procédé pour déterminer des angles d'arrivées de sources cohérentes dans un système comprenant plusieurs capteurs quelconques, les signaux se propageant selon des trajets cohérents ou sensiblement cohérents entre une source et les dits capteurs de réception du réseau, selon la revendication 1.

Le procédé selon l'invention offre notamment les avantages suivants :

- Il interpole le réseau de capteurs avec des fonctions omnidirectionnelles en azimut.
- Il traite le cas des sources cohérentes sur des secteurs angulaires différents.
- Il met en oeuvre l'algorithme de 0 à 360˚ en azimut.
- Il applique une technique de lissage spatial pour dé-corréler les sources cohérentes.

D'autres caractéristiques et avantages de la présente invention apparaîtront mieux à la lecture de la description qui suit d'un exemple de réalisation donné à titre illustratif et nullement limitatif annexé des figures qui représentent :

- La figure 1 un exemple de signaux émis par un émetteur et se propageant vers un réseau de capteurs,
- La figure 2 la représentation de l'incidence d'une source sur un plan de capteurs,
- La figure 3 la propagation de signaux en multi-trajets,
- La figure 4 un exemple de réseaux de capteurs de position $(x_n, y_n)$,
- La figure 5 un réseau de capteurs composé de deux sous-réseaux invariant par translation,
- La figure 6 la longueur d'interpolation avec des fonctions modales en fonction du rapport R/$\lambda$ du réseau,
- La figure 7 l'erreur en amplitude pour R/$\lambda$=0.5 où $\delta\theta$ = 50˚,
- La figure 8 l'interpolation selon l'invention sur deux secteurs angulaires,
- La figure 9 une zone d'interpolation sur deux secteurs.
- La figure 10 le maillage complet de l'espace pour le calcul des matrices Wjk

Avant de détailler un exemple de mise en oeuvre du procédé selon l'invention, quelques rappels sur la modélisation du signal en sortie d'un réseau de capteurs sont donnés.

**Modélisation du signal en sortie de réseau de capteurs**

En présence de $M$ sources avec $P_m$ multi-trajets pour la $m$-ième source, le signal en sortie, après réception sur l'ensemble des capteurs du réseau.

$$\mathbf{x}(t) = \begin{bmatrix} x_1(t) \\ \vdots \\ x_N(t) \end{bmatrix} = \sum_{m=1}^{M} \sum_{p=1}^{P_m} \rho_{mp} \ \mathbf{a}(\theta_{mp}) \, \mathrm{s}_m(t - \tau_{mp}) + \mathbf{n}(t) = \mathbf{A}\,\mathbf{s}(t) + \mathbf{n}(t) \qquad (1)\ .$$

où $x_n(t)$ est le signal en sortie du $n$-ième capteur, $\mathbf{A}=[\mathbf{A}_1 ... \mathbf{A}_M]$, $\mathbf{A}_m=[\mathbf{a}(\theta_{m1}) ... \mathbf{a}(\theta_{mPm})]$, $\mathbf{s}(t)=[\mathbf{s}_1(t)^T ... \mathbf{s}_M(t)^T]^T$, $\mathbf{s}_m(t)=[s_m(t-\tau_{m1}) ... s_m(t-\tau_{mPm})]^T$, $\mathbf{n}(t)$ est le bruit additif, $\mathbf{a}(\theta)$ est la réponse du réseau de capteurs à une source de direction $\theta$ et $\rho_{mp}$, $\theta_{mp}$, $\tau_{mp}$ sont respectivement l'atténuation, la direction et le retard du $p$-ième trajets de la $m$-ième source. Le vecteur $\mathbf{a}(\theta)$ qui s'appellent aussi vecteur directeur dépend des positions $(x_n, y_n)$ des capteurs (voir figure 4) et s'écrit :

$$\mathbf{a}(\theta) = \begin{bmatrix} a_1(\theta) \\ \vdots \\ a_N(\theta) \end{bmatrix} \quad \text{avec} \ \ a_n(\theta) = \exp\left( j\frac{2\pi}{\lambda}\left( x_n \cos(\theta) + y_n \sin(\theta) \right) \right) \qquad (2)\ .$$

Où $\lambda$ est la longueur d'onde et $R$ le rayon du réseau. Dans le cas d'un réseau linéaire équi-espacé le vecteur

**a**($\theta$) s'écrit :

$$\mathbf{a}(\theta) = \begin{bmatrix} \mathbf{1} \\ z_{Lin}(\theta) \\ \vdots \\ z_{Lin}(\theta)^{N-1} \end{bmatrix} \quad \text{avec} \quad z_{Lin}(\theta) = \exp\left( j2\pi \frac{d}{\lambda} \sin(\theta) \right) \qquad (3).$$

Où $d$ est la distance inter-capteurs.

En présence de trajets cohérents, les retards vérifient $\tau_{m1} = ... = \tau_{mPm}$. Dans ces conditions le modèle de signal de l'équation (1) devient :

$$\mathbf{x}(t) = \sum_{m=1}^{M} \mathbf{a}(\boldsymbol{\theta}_{\mathbf{m}}, \boldsymbol{\rho}_{\mathbf{m}}) \, \mathbf{s}_m(t) + \mathbf{n}(t) \quad \text{avec} \quad \mathbf{a}(\boldsymbol{\theta}_{\mathbf{m}}, \boldsymbol{\rho}_{\mathbf{m}}) = \sum_{p=1}^{P_m} \rho_{mp} \, \mathbf{a}(\theta_{mp}) \qquad (4).$$

où $\mathbf{a}(\boldsymbol{\theta}_{\mathbf{m}}, \boldsymbol{\rho}_{\mathbf{m}})$ est la réponse du réseau de capteurs à la m-ième source, $\theta_m = [\theta_{ml} \cdots \theta_{mP_m}]^T$ et $\rho_m = [\rho_{ml} \cdots \rho_{mP_m}]^T$. Le vecteur directeur de la source n'est plus $\mathbf{a}(\theta_{m1})$ mais un vecteur directeur composite $\mathbf{a}(\boldsymbol{\theta}_{\mathbf{m}}, \rho_{\mathbf{m}})$ qui est différent et qui dépend d'un nombre de paramètres plus importants.

Problématique des algorithmes de l'état de l'art en présence de sources cohérentes

L'algorithme MUSIC [1] est une méthode à haute résolution basée sur la décomposition en éléments propres de la matrice de covariance $\mathbf{R}_x = E[\mathbf{x}(t)\mathbf{x}(t)^H]$ du signal multi-capteurs $\mathbf{x}(t)$ ($E[.]$ est l'espérance mathématique ). D'après le modèle de l'équation (1), l'expression de la matrice de covariance $\mathbf{R}_x$ est la suivante :

$$\mathbf{R}_x = \mathbf{A} \, \mathbf{R}_s \, \mathbf{A}^H + \sigma^2 \, \mathbf{I}_N \quad \text{où} \quad \mathbf{R}_s = E[\mathbf{s}(t) \, \mathbf{s}(t)^H] \quad \text{et} \quad E[\mathbf{n}(t) \, \mathbf{n}(t)^H] = \sigma^2 \, \mathbf{I}_N$$

$$\text{où} \quad \mathbf{A} = [\mathbf{A}_1 ... \mathbf{A}_M] \quad \text{et} \quad \mathbf{A}_m = [\mathbf{a}(\theta_{m1}) ... \mathbf{a}(\theta_{mPm})] \qquad (5).$$

L'alternative à MUSIC pour les sources cohérentes est l'algorithme du Maximum de vraisemblance [2][3] qui nécessite l'optimisation d'un critère multi-dimensionnel dépendant des directions d'arrivées $\theta_{mp}$ de chacun des trajets. Cette dernière estimation $\theta_{mp}$ pour ($1 \leq m \leq M$) et ($1 \leq p \leq P_m$) d'un critère à $K = \sum_{m=1}^{M} P_m$ dimensions nécessite un coût de calcul élevé.

**Techniques de lissage spatial**

Les techniques de lissage spatial ont notamment pour objectif d'appliquer un pré-traitement sur la matrice de covariance $\mathbf{R}_x$ du signal multi-capteurs qui augmente le rang de la matrice $\mathbf{R}_s$ de covariance des sources afin de pouvoir appliquer des algorithmes de type MUSIC ou tout autre algorithme présentant des fonctionnalités équivalentes en présence de sources cohérentes sans avoir besoin d'appliquer un algorithme de type maximum de vraisemblance.

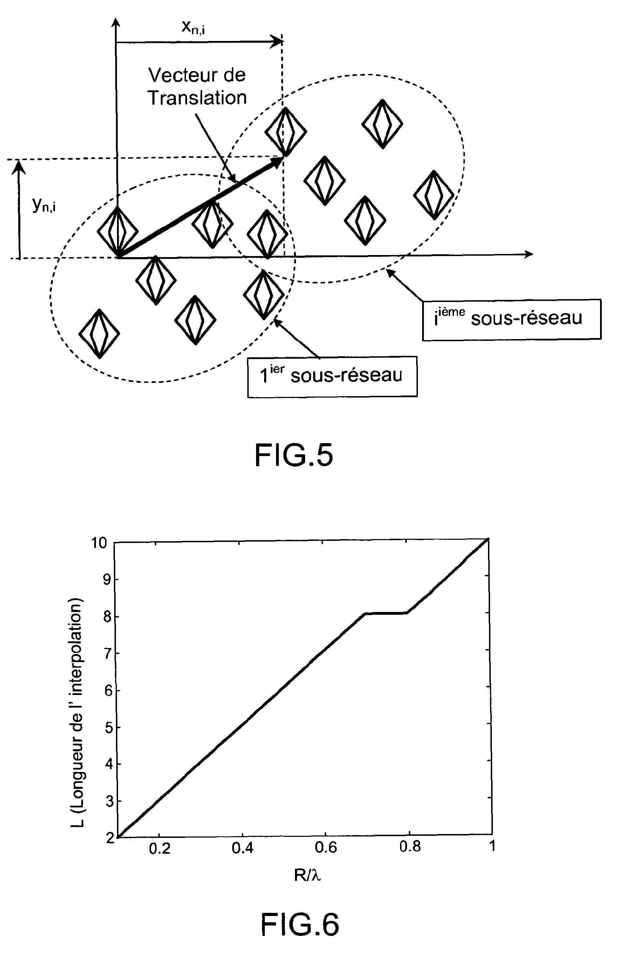

Lorsqu'un réseau de capteurs contient des sous-réseaux invariants par translation comme dans la figure 5, les techniques de lissage spatial [4][5] sont alors envisageables. Dans ce cas le signal reçu sur le *i-ième* sous réseau s'écrit :

$$\mathbf{x}^{i}(t) = \sum_{m=1}^{M} \sum_{p=1}^{P_m} \rho_{mp} \ \mathbf{a}^{i}(\theta_{mp}) \ \mathbf{s}_{m}(t - \tau_{mp}) + \mathbf{n}(t) = \mathbf{A}^{i} \ \mathbf{s}(t) + \mathbf{n}(t) \qquad (6) \ .$$

Où $\mathbf{a}^{i}(\theta)$ est le vecteur directeur de ce sous-réseau qui a la particularité de vérifier :

$$\mathbf{a}^{i}(\theta) = \alpha^{i}(\theta)\mathbf{a}^{1}(\theta) \ \text{ avec } \ \alpha^{i}(\theta) = \exp\left( j\frac{2\pi}{\lambda}\left( x_{n,i}\cos(\theta) + y_{n,i}\sin(\theta) \right) \right) \qquad (7) \ .$$

La matrice de mélange $\mathbf{A}^{i}$ de l'équation (6) s'écrit alors

$$\mathbf{A}^{i} = \mathbf{A}^{1}\Phi_{i} \ \text{ avec } \ \Phi_{i} = diag\left\{ \alpha^{i}(\theta_{11}) \quad \cdots \quad \alpha^{i}(\theta_{1P_1}) \quad \cdots \quad \alpha^{i}(\theta_{M1}) \quad \cdots \quad \alpha^{i}(\theta_{MP_M}) \right\} \qquad (8) \ .$$

Sachant que $\mathbf{A}^{i} = [\mathbf{A}_{i}^{i}... \mathbf{A}_{M}^{i}]$ et $\mathbf{A}_{m}^{i} = [\ \mathbf{a}^{i}(\theta_{m1}) ... \mathbf{a}^{i}(\theta_{mP_m})]$. Dans le cas du réseau linéaire de l'équation (3) on obtient

$$\mathbf{x}^{i}(t) = \begin{bmatrix} x_{i}(t) \\ \vdots \\ x_{i+N'}(t) \end{bmatrix} \ \text{ avec } \ \mathbf{a}^{1}(\theta) = \begin{bmatrix} 1 \\ z_{Lin}(\theta) \\ \vdots \\ z_{Lin}(\theta)^{N'-1} \end{bmatrix} \ \text{ et } \ \alpha^{i}(\theta) = z(\theta)^{i} \qquad (9) \ .$$

La technique du lissage est basée sur la structure de la matrice de covariance $\mathbf{R}_{x}^{i} = E[\mathbf{x}(t)^{i}\mathbf{x}(t)^{iH}]$ qui d'après (6) (8) s'écrit de la manière suivante :

$$\mathbf{R}_{x}^{i} = \mathbf{A}^{1} \ \Phi_{i} \ \mathbf{R}_{s} \ \Phi_{i}^{*} \ \mathbf{A}^{1H} + \sigma^{2} \ \mathbf{I}_{N} \qquad (10) \quad .$$

La technique de lissage spatial permet alors d'appliquer un algorithme de goniométrie tel que l'algorithme MUSIC sur la matrice de covariance suivante :

$$\mathbf{R}_{x}^{SM} = \sum_{i=1}^{I} \mathbf{R}_{x}^{i} \qquad (11) \quad .$$

Où I est le nombre de sous-réseaux. En effet cette technique permet de décorréler au maximum I trajets cohérents car

$$\mathbf{R}_{x}^{SM} = \mathbf{A}^{1}\mathbf{R}_{s}^{SM}\mathbf{A}^{1H} + \sigma^{2}\mathbf{I}_{N'} \ \text{ où } \ \mathbf{R}_{s}^{SM} = \sum_{i=1}^{I} \Phi_{i}\mathbf{R}_{s}\Phi_{i}^{*} \qquad (12) \quad .$$

Et ainsi rang$\{ \mathbf{R}_{s} \} \leq$ rang$\{ \mathbf{R}_{s}^{SM} \} \leq \min(I \times$rang$\{ \mathbf{R}_{s}\}, \sum_{m=1}^{M} P_{m})$.

La technique de lissage spatial par Forward-Backward [4] nécessite un réseau de capteurs ayant un centre de symétrie. Dans ces conditions le vecteur directeur vérifie :

$$\tilde{\mathbf{a}}(\theta) = \mathbf{Z}\,\mathbf{a}(\theta)^* = \beta(\theta)\,\mathbf{a}(\theta) \quad \text{avec} \quad \mathbf{Z} = \begin{bmatrix} 0 & 0 & 1 \\ 0 & \cdot^{\cdot} & 0 \\ 1 & 0 & 0 \end{bmatrix} \qquad (13) \quad .$$

Le réseau linéaire de l'équation (3) vérifie cette condition avec $\beta(\theta) = z_{Lin}\,(\theta)^{-N}$. La technique de lissage par Forward-Backward consiste à appliquer un algorithme de goniométrie tel que MUSIC sur la matrice de covariance suivante :

$$\mathbf{R}_x^{FB} = \mathbf{R}_x + \mathbf{Z}\mathbf{R}_x^*\mathbf{Z}^T \qquad (14) \quad .$$

Cette technique permet de décorréler au maximum 2 trajets cohérents car

$$\mathbf{R}_x^{FB} = \mathbf{A}\mathbf{R}_s^{FB}\mathbf{A}^H + \sigma^2\mathbf{I}_N \quad \text{où} \quad \mathbf{R}_s^{FB} = \mathbf{R}_s + \Phi_{FB}\mathbf{R}_s\,\Phi_{FB}^* \qquad (15) \quad .$$

Ainsi rang{ $\mathbf{R}_s$ }$\leq$rang {$\mathbf{R}_s^{SM}$}$\leq$ min($2\times$rang{$\mathbf{R}_s$}, $\sum_{m=1}^{M} P_m$ ) avec

$$\Phi_{FB} = diag\left\{\beta(\theta_{11}) \quad \cdots \quad \beta(\theta_{1P_1}) \quad \cdots \quad \beta(\theta_{M1}) \quad \cdots \quad \beta(\theta_{MP_M})\right\} \qquad (16) \quad .$$

Les techniques de lissage spatial et Forward-Backward peuvent se combiner pour accroître la capacité de décorrélation en nombre de trajets. Ces techniques de lissage permettent de traiter les sources cohérentes avec un coût de calcul voisin de la méthode MUSIC. Toutefois ces techniques nécessitent des géométries de réseaux de capteurs très particuliers. Il faut noter que ces géométries de réseaux particulier sont quasiment impossibles à concevoir en présence de couplage mutuel entre les capteurs ou de couplage avec la structure porteuse du réseau de capteurs.

## Techniques d'interpolation d'un réseau de capteurs

Comme il a été explicité ci-dessus, il existe des techniques de goniométrie des sources cohérentes à faible coût de calcul sur des réseaux particuliers. L'objet de la présente invention concerne notamment l'application de ces techniques à des réseaux à géométrie quelconque. Pour cela, il est nécessaire de réaliser des transformations du vecteur directeur $\mathbf{a}(\theta)$ pour obtenir les propriétés remarquables des équations (7) et/ou (13). Ces transformations sont réalisées par un processus d'interpolation selon l'invention comprenant les étapes décrites ci-après à titre illustratif et nullement limitatif. La transformation s'effectue, par exemple, en appliquant une matrice d'interpolation sur les signaux capteurs (signaux reçus par les capteurs d'un réseau) et permet d'obtenir un vecteur directeur équivalent $\mathbf{e}(\theta)$ qui vérifie les propriétés remarquables des équations (7) et/ou (13).

L'invention concerne aussi un procédé permettant d'interpoler des vecteurs directeurs, vecteurs dépendant des positions des capteurs d'un réseau qui reçoit des signaux.

## Interpolation avec des fonctions modales

Afin de réaliser une interpolation avec une fonction omni-directionnelle en $\theta$, où $\theta$ correspond à la direction d'une source émettrice, le procédé utilise des fonctions modales $z(\theta)^k$ où $z(\theta)=\exp(j\theta)$, par exemple. La fonction d'interpolation du vecteur directeur peut s'exprimer sous la forme suivante :

$$\mathbf{a}(\theta) \approx \mathbf{W}\ \mathbf{e}(\theta) \quad \text{avec} \quad \mathbf{e}(\theta) = \begin{bmatrix} z(\theta)^{-L} \\ \vdots \\ z(\theta)^{L} \end{bmatrix} = \begin{bmatrix} \exp(-jL\theta) \\ \vdots \\ \exp(jL\theta) \end{bmatrix} \text{ pour } \mathbf{0 \leq \theta < 360°} \quad (17) \quad .$$

La matrice $\mathbf{W}$ de dimension $N \times (2L+1)$, non forcément carrée, est obtenue en minimisant au sens des moindres carrés l'écart $\|\mathbf{a}(\theta) - \mathbf{We}(\theta)\|^2$ pour des azimuts vérifiant $\mathbf{0 \leq \theta < 360°}$. La longueur de l'interpolation $2L+1$ dépend de l'ouverture du réseau. Le paramètre $L$ est déterminé, par exemple, à partir du critère d'erreur d'amplitude suivant :

$$A\_dB(\mathbf{a}(\theta), \mathbf{We}(\theta)) = \max_{\theta, n} \left\{ 20 \log_{10} \left( \left| \frac{a_n(\theta)}{\hat{a}_n(\theta)} \right| \right) \right\} \text{ avec } \mathbf{W}\ \mathbf{e}(\theta) = \begin{bmatrix} \hat{a}_1(\theta) \\ \vdots \\ \hat{a}_N(\theta) \end{bmatrix} \quad (18) \quad .$$

où $L$ est la valeur minimale vérifiant A_dB inférieur à 0.1dB. En effet, A_dB est nul lorsque l'interpolation est parfaite et donc lorsque $\mathbf{a}(\theta) = \mathbf{We}(\theta)$. Cette valeur est associée à une erreur en phase de 0.7˚ qui correspond à une incertitude sur la mesure des vecteurs directeurs $\mathbf{a}(\theta)$ lors d'une phase de calibration. Dans le cas particulier d'un réseau circulaire de rayon $R$ avec $N=5$ capteurs où

$$\mathbf{a}(\theta) = \begin{bmatrix} a_1(\theta) \\ \vdots \\ a_N(\theta) \end{bmatrix} \text{ with } a_n(\theta) = \exp\left( j2\pi \frac{R}{\lambda} \cos\left( \theta - 2\pi \left( \frac{n-1}{N} \right) \right) \right) \quad (19)$$

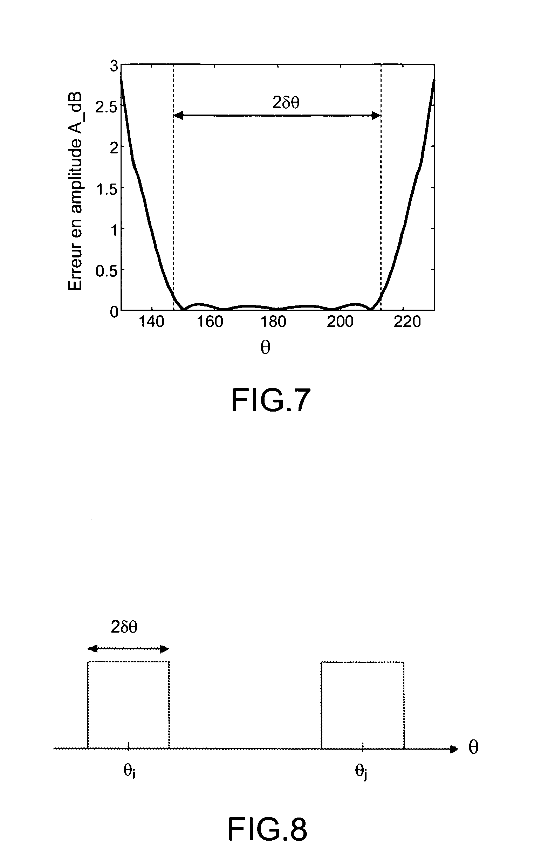

La dépendance entre le paramètre $L$ de l'interpolation et le rapport R/λ est illustrée figure 7. Cette figure 7 montre qu'un réseau de rayon $R$ nécessite $2L+1=21/\lambda$ coefficients pour une interpolation sur 360˚.
En présence de $M$ sources avec $P_m$ multi-trajets pour la $m$-ième source, le signal de l'équation (1) s'écrit de la façon suivante :

$$\mathbf{x}(t) = \sum_{m=1}^{M} \sum_{p=1}^{P_m} \rho_{mp}\ \tilde{\mathbf{a}}(\theta_{mp})\ s_m(t - \tau_{mp}) + \mathbf{n}(t) = \tilde{\mathbf{A}}\ \mathbf{s}(t) + \mathbf{n}(t) \quad (20) \quad .$$

avec $\tilde{\mathbf{a}}(\theta) = \mathbf{W}\ \mathbf{e}(\theta)$ et $\tilde{\mathbf{A}} = \mathbf{W}\ \mathbf{E}$
où $\mathbf{E} = [\ \mathbf{E}_1 ... \ \mathbf{E}_M]$ et $\mathbf{E}_m = [\ \mathbf{e}(\theta_{ml}) ... \ \mathbf{e}(\theta_{mPm})]$. Cette dernière expression s'écrit :

$$\mathbf{x}(t) = \mathbf{W}\ \mathbf{y}(t) + \mathbf{n}(t) \quad \text{où} \quad \mathbf{y}(t) = \mathbf{E}\ \mathbf{s}(t) \quad (21)$$

Où la relation entre $\mathbf{x}(t)$ et $\mathbf{y}(t)$ est linéaire.

**Adaptation du lissage spatial sur des réseaux interpolés par des fonctions modales**

Les méthodes de type MUSIC [1] ou ESPRIT sont basées sur le modèle des équations (1)(20). Dans la problématique de l'interpolation d'un réseau par des fonctions modales, deux cas sont envisagés:

- $N \geq 2L+1$ : Le signal y(t) peut directement être obtenu à partir du signal x(t) en effectuant : $\mathbf{y}(t) = (\mathbf{W}^H \mathbf{W})^{-1} \mathbf{W}^H \mathbf{x}(t)$. Tous les algorithmes adaptés au réseau linéaire sont applicables sur le signal $\mathbf{y}(t)$ : il est ainsi possible d'appliquer une technique de lissage spatial pour décorréler les multi-trajets, telle que décrite, par exemple, précédemment.
- $N < 2L+1$ : Le signal $\mathbf{y}(t)$ ne peut pas être directement obtenu à partir de x(t). Les algorithmes applicables sur les réseaux linéaires ne sont plus directement applicables, le procédé selon l'invention propose une méthode permettant de remédier à ce problème.

**Traitement du cas où $N \leq 2L+1$**

Comme la matrice **W** contient moins de lignes que de colonnes, il est envisagé dans ce procédé d'interpoler le réseau par $K$ secteurs de largeur $\delta\theta = 180/K$ avec des matrices d'interpolation **W$_k$** carrés où

$$\mathbf{a}(\theta) = \mathbf{W_k}\ \mathbf{e}(\theta) \ \ \text{avec} \ \ \mathbf{e}(\theta) = \begin{bmatrix} \exp(-jL_0\theta) \\ \vdots \\ \exp(jL_0\theta) \end{bmatrix} \text{pour} \ \left|\theta - \theta_k\right| < \delta\theta \qquad (22)$$

Où les $K$ matrices **W$_k$** sont carrées avec $N = 2L_0 + 1$ et **W$_k$** $\mathbf{e}(\theta)$ est la fonction d'interpolation sur un secteur. On remarque que $\mathbf{a}(\theta) \neq \mathbf{W_k}\ \mathbf{e}(\theta)$ pour $|\theta-\theta_k| \geq \delta\theta$. Les matrices **W$_k$** sont obtenues en minimisant l'écart $\|\mathbf{a}(\theta) - \mathbf{W}_k\mathbf{e}(\theta)\|^2$ au sens des moindres carrés l'écart pour $|\theta - \theta_k| < \delta\theta$. La largeur du cône d'interpolation $\delta\theta$ est déterminée à partir du critère d'erreur en amplitude suivant :

$$\text{A\_dB}(\mathbf{a}(\theta), \mathbf{W}_k\mathbf{e}(\theta)) = \max_{\theta_k - \delta\theta \leq \theta \leq \theta_k - \delta\theta, n} \left\{ \mathbf{20}\log_{10}\left(\left|\frac{a_n(\theta)}{\hat{a}_n(\theta)}\right|\right) \right\} \ \ \text{avec} \ \ \mathbf{W_k}\ \mathbf{e}(\theta) = \begin{bmatrix} \hat{a}_1(\theta) \\ \vdots \\ \hat{a}_N(\theta) \end{bmatrix} \quad (23)$$

où $\delta\theta$ est la valeur minimale vérifiant que A_dB soit inférieur à 0.1dB car A_dB est nul lorsque $\mathbf{a}(\theta) = \mathbf{W}_k\mathbf{e}(\theta)$. En reprenant le réseau circulaire de l'équation (19), la largeur d'interpolation $\delta\theta$ dépend de la manière suivante du rapport $R/\lambda$ et du nombre $K = 180/\delta\theta$ de secteurs (Tableau 1 qui donne la Largeur du cône d'interpolation en fonction de avec A_dB=0.1).

**Tableau 1**

| $R/\lambda$ | $\delta\theta$ | $K$ |
|---|---|---|
| 0.1000 | 180.0000 | 1 |
| 0.1200 | 180.0000 | 1 |
| 0.1400 | 96.0000 | 2 |
| 0.1500 | 90.0000 | 2 |
| 0.2000 | 70.0000 | 3 |
| 0.3000 | 50.0000 | 4 |
| 0.4000 | 37.0000 | 5 |
| 0.5000 | 33.0000 | 6 |
| 0.6000 | 25.0000 | 7 |
| 0.7000 | 21.0000 | 8 |
| 0.8000 | 18.5000 | 9 |

La figue 7 représente l'erreur en amplitude A_dB$(\theta)$ = max$\{|\mathbf{20}\log_{10}(|a_n(\theta)/\hat{a}_n(\theta)|)|\}$ pour $R/\lambda$=0.5 et montre que A_dB$(\theta)$ est bien inférieur à 0.1dB pour $|\theta$-**180**˚$|$ < **33**˚.

Selon une variante de mise en oeuvre du procédé, on applique une technique de lissage spatial sur un réseau interpolé, par secteur. Ainsi le vecteur suivant :

$$\hat{\mathbf{e}}(\theta) = \mathbf{W_k}^{-1}\mathbf{a}(\theta) = \begin{bmatrix} \hat{e}_1(\theta) \\ \vdots \\ \hat{e}_N(\theta) \end{bmatrix} \approx \begin{bmatrix} \exp\left(-j\frac{N}{2}\theta\right) \\ \vdots \\ \exp\left(j\frac{N}{2}\theta\right) \end{bmatrix} \qquad (24)$$

doit vérifier les propriétés des équations (7)(13) pour toutes les incidences $\theta_{mp}$ des sources cohérentes de l'équations (1). En conséquence en posant

$$\hat{\mathbf{e}}^k(\theta) = \begin{bmatrix} \hat{e}_k(\theta) \\ \vdots \\ \hat{e}_{i+N'}(\theta) \end{bmatrix} \approx \exp(jk\theta) \begin{bmatrix} \exp\left(-j\frac{N}{2}\theta\right) \\ \vdots \\ \exp\left(j\left(-\frac{N}{2}+1+N'\right)\theta\right) \end{bmatrix} \qquad (25)$$

Les incidences des sources cohérentes doivent vérifier

$$\hat{\mathbf{e}}^k\left(\theta_{mp}\right) = \alpha^k(\theta_{mp})\hat{\mathbf{e}}^1\left(\theta_{mp}\right) \;\; \text{avec} \;\; \alpha^k(\theta) = \exp(jk\theta) \qquad (26)$$

Et/ou vérifier que

$$\hat{\mathbf{e}}\left(\theta_{mp}\right) = \mathbf{Z}\,\hat{\mathbf{e}}\left(\theta_{mp}\right)^* = \beta(\theta_{mp})\,\hat{\mathbf{e}}\left(\theta_{mp}\right) \;\;\; \text{avec} \;\; \beta(\theta) = 1 \qquad (27)$$

Les conditions des équations (26)(27) sont valables uniquement lorsque les incidences $\theta_{mp}$ des sources cohérentes sont dans le même secteur d'interpolation en vérifiant: $|\theta_{mp} - \theta_k| < \delta\theta$. En conséquence le procédé traite les deux situations suivantes:

- Les sources cohérentes sont dans le même secteur d'interpolation
- Les sources cohérentes sont dans des secteurs d'interpolations différents.

Pour traiter les situations de sources cohérentes présentent dans des secteurs différents, il est envisagé en mettant en oeuvre le procédé selon l'invention d'interpoler conjointement le vecteur directeur $\mathbf{a}(\theta)$ sur plusieurs secteurs.

**Interpolation conjointe sur $P = 2$ secteurs.**

L'interpolation conjointe sur $P = 2$ secteurs de largeur $\delta\theta$ s'effectue avec la matrice d'interpolation $\mathbf{W_{ij}}$ carrée où

$$\mathbf{a}(\theta) = \mathbf{W_{ij}}\,\mathbf{e}(\theta) \;\; \text{avec} \;\; \mathbf{e}(\theta) = \begin{bmatrix} \exp(-jL_0\theta) \\ \vdots \\ \exp(jL_0\theta) \end{bmatrix} \text{pour } \left|\theta - \theta_i\right| < \delta\theta \;\; \text{et} \;\; \left|\theta - \theta_j\right| < \delta\theta \qquad (28)$$

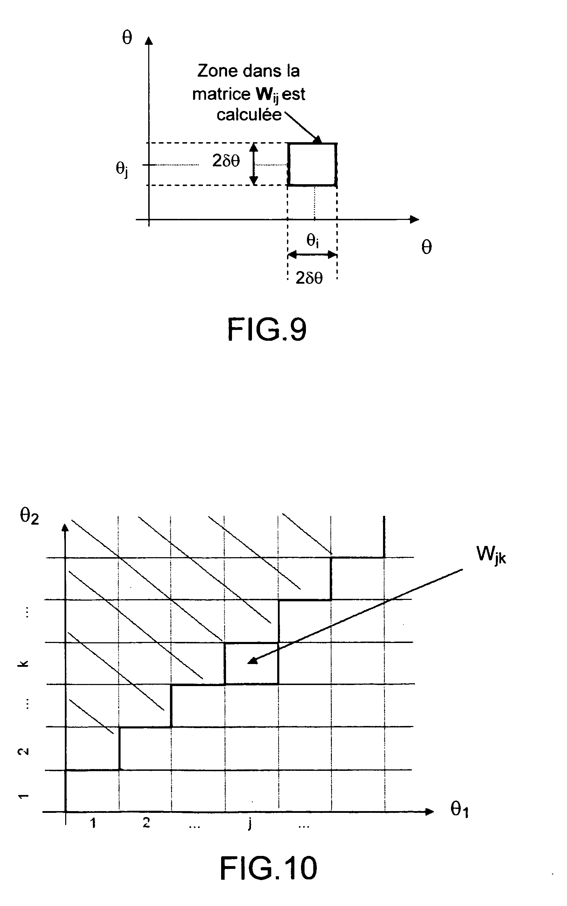

Où la- matrice $\mathbf{W_{ij}}$ est de dimension $N$x$N$ avec $N = 2L_0 + 1$ et les intervalles $|\theta - \theta_i| < \delta\theta$ et $|\theta - \theta_j| < \delta\theta$ sont disjoints (voir figure 8 et figure 9). $\mathbf{W_{ij}}\,\mathbf{e}(\theta)$ est la fonction d'interpolation du vecteur directeur $\mathbf{a}(\theta)$ sur deux secteurs car $\mathbf{a}(\theta) \neq$

$\mathbf{W_{ij}}\ \mathbf{e}(\theta)$ lorsque $|\theta-\theta_i| \geq \delta\theta$ ou $|\theta-\theta_j| \geq \delta\theta$. Les matrices $\mathbf{W_{ij}}$ sont obtenues en minimisant l'écart $\|\mathbf{a}\ (\theta) - \mathbf{W}_{ij}\mathbf{e}\ (\theta)\|^2$ au sens des moindres carrés pour $|\theta - \theta_i| < \delta\theta$ et $|\theta - \theta_j| < \delta\theta$. La largeur du cône d'interpolation $\delta\theta$ est déterminée à partir de

$$\mathrm{A\_dB}(\mathbf{a}(\theta), \mathbf{W}_{ij}\mathbf{e}(\theta)) = \max_{|\theta-\theta_i|<\delta\theta, |\theta-\theta_j|<\delta\theta, n}\left\{\mathbf{20}\log_{\mathbf{10}}\left(\left|\frac{a_n(\theta)}{\hat{a}_n(\theta)}\right|\right)\right\} \ \text{avec} \ \mathbf{W_{ij}}\ \mathbf{e}(\theta) =$$

$$\begin{bmatrix} \hat{a}_1(\theta) \\ \vdots \\ \hat{a}_N(\theta) \end{bmatrix} \tag{29}$$

où $\delta\theta$ est la valeur minimal pour laquelle l'erreur en amplitude A_dB est inférieure à 1dB. Sachant que $\mathbf{W}_{ij}=\mathbf{W}_{ji}$, le nombre de matrices $\mathbf{W}_{ij}$ nécessaires vaut $(K\times(K+\mathbf{1}))/\mathbf{2}$ avec $K = \mathbf{90}/\delta\theta$ (voir figue 10). En reprenant le réseau circulaire de l'équation (19), la largeur d'interpolation $\delta\theta$ et le nombre de secteurs $ij$ $((K \times (K + \mathbf{1}))/\mathbf{2})$ dépendent du rapport $R/\lambda$ selon le tableau 2 qui regroupe la largeur des P=2 secteurs disjoints d'interpolation en fonction de $R/\lambda$ avec A_dB=1

**Tableau 2**

| $R/\lambda$ | $\delta\theta$ | $K$ | Nombre de secteurs $ij$ $(K \times (K + 1))/2$ |
|---|---|---|---|
| 0.1000 | 45.0000 | K 1 | 1 |
| 0.1200 | 45.0000 | 1 | 1 |
| 0.1400 | 45.0000 | 1 | 1 |
| 0.1500 | 45.0000 | 1 | 1 |
| 0.2000 | 45.0000 | 1 | 1 |
| 0.3000 | 31.0000 | 3 | 6 |
| 0.4000 | 22.0000 | 4 | 10 |
| 0.5000 | 15.0000 | 6 | 21 |
| 0.6000 | 14.0000 | 7 | 28 |
| 0.7000 | 14.0000 | 7 | 28 |
| 0.8000 | 14.0000 | 7 | 28 |

La largeur du cône d'interpolation $\delta\theta$ peut aussi être établie en tenant compte de la technique de lissage spatial nécessitant la relation de l'équation (24)(25)(26). En prenant $N' = N - \mathbf{1}$, la largeur du cône $\delta\theta$ est déterminée à partir de :

$$\mathrm{A\_dB}(\hat{\mathbf{e}}^{\mathbf{1}}(\theta), \hat{\mathbf{e}}^{\mathbf{2}}(\theta)) = \max_{|\theta-\theta_i|<\delta\theta, |\theta-\theta_j|<\delta\theta, n}\left\{\mathbf{20}\log_{\mathbf{10}}\left(\left|\frac{\hat{e}_n(\theta)}{\hat{e}_{n+1}(\theta)}\right|\right)\right\} \quad \text{avec}$$

$$\mathbf{W}_\mathbf{k}^{-\mathbf{1}}\mathbf{a}(\theta) = \begin{bmatrix} \hat{e}_1(\theta) \\ \vdots \\ \hat{e}_N(\theta) \end{bmatrix} \tag{30} \quad .$$

où $\delta\theta$ est la valeur minimale pour laquelle l'erreur en amplitude A_dB est inférieure à 1dB.

**Tableau 3 - Largeur des P=2 secteurs disjoints d'interpolation pour le lissage spatial en fonction de $R/\lambda$ avec A_dB=1**

| $R/\lambda$ | $\delta\theta$ | $K$ | Nombre de secteurs $ij$ ($K \times (K + 1))/2$ |
|---|---|---|---|
| 0.1000 | $\delta\theta$ 45.0000 | K 1 | 1 |
| 0.1200 | 45.0000 | 2 | 3 |
| 0.1400 | 45.0000 | 2 | 3 |
| 0.1500 | 45.0000 | 2 | 3 |
| 0.2000 | 40.0000 | 3 | 6 |
| 0.3000 | 30.0000 | 3 | 6 |
| 0.4000 | 14.0000 | 7 | 28 |
| 0.5000 | 12.0000 | 7 | 28 |
| 0.6000 | 12.0000 | 7 | 28 |
| 0.7000 | 12.0000 | 7 | 28 |
| 0.8000 | 12.0000 | 7 | 28 |

Ainsi en présence d'un maximum de $P=2$ sources cohérentes on effectue dans chaque secteur $|\theta - 2i \times \delta\theta| < \delta\theta$ et $|\theta - 2j \times \delta\theta| < \delta\theta$ la transformation suivante sur le signal de l'équation (1) :

$$\mathbf{y}^{ij}(t) = \mathbf{W}_{ij}^{-1}\mathbf{x}(t) \qquad (31)$$

Qui s'écrit aussi :

$$\mathbf{y}^{ij}(t) = \sum_{m=1}^{M}\sum_{p=1}^{P_m}\rho_{mp}\ \hat{\mathbf{e}}(\theta_{mp})\ \mathrm{s}_m(t-\tau_{mp}) + \mathbf{n}(t) = \mathbf{E}\ \mathbf{s}(t) + \mathbf{n}(t)$$

$$\text{avec}\ \hat{\mathbf{e}}(\theta) = \begin{bmatrix} \exp(-jL_0\theta) \\ \vdots \\ \exp(jL_0\theta) \end{bmatrix}\ \text{lorsque}\quad |\theta - 2i \times \delta\theta| < \delta\theta\ \ \text{et}\ \ |\theta - 2j \times \delta\theta| < \delta\theta \qquad (32)$$

où $\mathbf{E} = [\ \mathbf{E}_1 ... \ \mathbf{E}_M]$ et $\mathbf{E}_m = [\ \hat{\mathbf{e}}(\theta_{m1}) ... \ \hat{\mathbf{e}}(\theta_{mP_m})]$. Tous les algorithmes adaptés au réseau linéaire sont applicables sur le signal $\mathbf{y}^{ij}(t)$ : une technique de lissage spatial peut être utilisée pour décorréler les multi-trajets cohérents dans l'intervalle $|\theta - 2i \times \delta\theta| < \delta\theta$ et $|\theta - 2j \times \delta\theta| < \delta\theta$ puis appliquer un algorithme de goniométrie tel que ESPRIT. Toutefois, seules les estimées $\hat{\theta}_{mp}$ vérifiant $|\hat{\theta}_{mp} - 2i \times \delta\theta| < \delta\theta$ et $|\hat{\theta}_{mp} - 2j \times \delta\theta| < \delta\theta$ sont des solutions. Pour obtenir l'ensemble des estimées il faut appliquer un lissage spatial et une goniométrie dans tous les secteurs indicés par $(i,j)$ pour $0 \leq i \leq j \leq 180/\delta\theta$.

**Interpolation conjointe sur $P$ secteurs.**

L'interpolation conjointe sur $P$ secteurs de largeur $\delta\theta$ s'effectue avec la matrice d'interpolation $\mathbf{W}_{i1...iP}$ carrés où

$$\mathbf{a}(\theta) = \mathbf{W}_{i1...iP}\ \mathbf{e}(\theta)\ \text{ avec }\ \mathbf{e}(\theta) = \begin{bmatrix} \exp(-jL_0\theta) \\ \vdots \\ \exp(jL_0\theta) \end{bmatrix}\ \text{pour }\ |\theta - \theta_{i_p}| < \delta\theta\ \ \text{et}\ \ 1 \leq p \leq P \qquad (33)$$

Où $\mathbf{W_{i1...1P}}\,\mathbf{e}(\theta)$ correspond à une fonction d'interpolation ($\mathbf{a}(\theta) \neq \mathbf{W_{i1...iP}}\,\mathbf{e}(\theta)$ lorsque $|\theta-\theta_{i_p}|< \delta\theta$ pour $1 \leq p \leq P$ n'est pas vérifié),

Où la matrice $\mathbf{W_{i1...iP}}$ est carré avec $N = 2L_0 + 1$ et les intervalles $|\theta-\theta_{i_p}| < \delta\theta$ et $1 \leq p \leq P$ sont disjoints. Les matrices d'interpolation $\mathbf{W_{i1...iP}}$ sont obtenues en minimisant l'écart $\|\mathbf{a}\,(\theta) - \mathbf{W}_{i_1...i_p}\,\mathbf{e}(\theta)\|^2$ au sens des moindres carrés l'écart pour $|\theta - \theta_{i_p}| < \delta\theta$ et $1 \leq p \leq P$. La largeur du cône d'interpolation $\delta\theta$ est déterminée à partir de

$$\text{A\_dB}(\hat{\mathbf{e}}^1(\theta),\hat{\mathbf{e}}^2(\theta)) = \max_{|\theta-\theta_{i_p}|<\delta\theta \text{ pour } 1\leq p\leq P,n}\left\{20\log_{10}\left(\left|\frac{\hat{e}_n(\theta)}{\hat{e}_{n+1}(\theta)}\right|\right)\right\} \tag{34}$$

$$\text{avec} \quad \mathbf{W}_{i_1...i_P}^{-1}\mathbf{a}(\theta) = \begin{bmatrix} \hat{e}_1(\theta) \\ \vdots \\ \hat{e}_N(\theta) \end{bmatrix}$$

où $\delta\theta$ est la valeur minimale pour laquelle l'erreur en amplitude A_dB est inférieure à une valeur **A_dB_ref**. Typiquement **A_dB_ref** vaut 1dB. Les étapes pour évaluer les matrices d'interpolation $\mathbf{W_{i1...iP}}$ ainsi que la largeur d'interpolation $\delta\theta$ de chaque secteur sont les suivantes.

**Etape n˚A.1** : $\delta\theta=180°/P$ et $\theta_{iP} = 2\delta\theta(p\text{-}1)$ pour $1 \leq p \leq P$

**Etape n˚A.2** : Calcul de la matrice $\mathbf{W}_{i_1...i_p}$ en minimisant au sens des moindres carrés $\|\mathbf{a}\,(\theta) - \mathbf{W}_{i_1...i_p}\mathbf{e}(\theta)\|^2$ pour $|\theta-\theta_{i_p}| < \delta\theta$ et $1\leq p \leq P$.

**Etape n˚A.3** : Calcul du critère A_dB($\hat{\mathbf{e}}^1(\theta)$, $\hat{\mathbf{e}}^2(\theta)$) de l'équation (34).

**Etape n˚A.4** : Si A_dB($\hat{\mathbf{e}}^1(e)$, $\hat{\mathbf{e}}^2(\theta)$)>**A_dB_ref** alors $\delta\theta = \delta\theta/2$ et retour à l'étape A.2

**Etape n˚A.5** : Calcul de $K = 180/(P\delta\theta)$

**Etape n˚A.6** : Pour tous $P$-uplets $(i_1...i_P)$ vérifiant $0 \leq i_1 \leq ... \leq i_P < K$ :

    **Etape n˚A.6.1** : Calcul des $\theta_{i_p} = 2\delta\theta\times i_p$ pour $1 \leq p \leq P$

    **Etape n˚A.6.2** : Calcul de la matrice $\mathbf{W}_{i_1...i_p}$ en minimisant au sens des moindres carrés $\|\mathbf{a}(\theta)-W_{i_1...i_p}\mathbf{e}(\theta)\|^2$ pour $|\theta - \theta_{i_p}| < \delta\theta$ et $1 \leq p \leq P$.

    **Etape n˚A.6.3** : Retour à l'étape n˚A.6.1 si tous les $P$-uplets $(i_1...i_P)$ vérifiant $1 \leq i_1 \leq ... \leq i_P \leq K$ ne sont pas explorés.

Les étapes pour effectuer la goniométrie avec une interpolation sur $P$ secteurs utilisent les matrices d'interpolation calculées lors des étapes A. Les étapes de la goniométrie sont alors les suivantes :

**Etape n˚B.0** : Initialisation de l'ensemble $\Theta$ à $\varnothing$

**Etape n˚B** : Pour tous $P$-uplets $(i_1 ...i_P)$ vérifiant $0 \leq i_1 \leq ... \leq i_P < K$ :

    **Etape n˚B.1 :** Calcul de $y^{i1...iP}(t) = W_{i_1...iP}^{-1}x(t)$

    **Etape n˚B.2 :** Calcul des $\theta_{iP}=2\delta\theta\times i_p$ pour $1 \leq p \leq P$

    **Etape n˚B.3 :** Application d'une technique de lissage spatial et/ou Forward-Backward sur l'observation $\mathbf{y}^{i1...i_P}(t)$ puis application d'une goniométrie de type ESPRIT pour obtenir les incidences $\hat{\theta}_k$ pour $1 \leq k \leq K_{i_1...i_p}$.

    **Etape n˚B.4 :** Sélection des incidences estimée $\hat{\theta}_k \in \Theta_{i_1...i_p}$, où $\Theta_{i_1...i_p} = \{|\hat{\theta}_k-\theta_{iP}| < \delta\theta$ pour $1 \leq p \leq P$ et $J_{MUSIC}(\theta) < \eta$ selon le critère suivant de MUSIC[1] où

$$J_{MUSIC}(\theta) = \frac{\mathbf{a}(\theta)^H\,\mathbf{\Pi}_b\mathbf{a}(\theta)}{\mathbf{a}(\theta)^H\,\mathbf{a}(\theta)} \tag{35}$$

où $\Pi_b$ est le projecteur bruit extrait de la matrice de covariance $\mathbf{R}_x$. (l'équation (7) fait partie du passage en orange qui a été supprimé. ) donc la proposition ; selon une équation connue des méthodes de goniométrie de type MUSIC. (Le seuil $\eta$ est choisi typiquement à 0.1).

    **Etape n˚B.5** : $\Theta=\Theta\cup\Theta_{i_1...i_p}$ ensembles des angles d'incidence vérifiant l'étape B.4 pour tous les secteurs associés aux *P*-uplets *(i$_1$...i$_P$)* traité par l'algorithme.

**Etape n˚B.6 :** Retour à l'étape n˚ **B.1** tant que tous les *P*-uplets *(i$_1$...i$_P$)* vérifiant $0 \leq i_1 \leq ... \leq i_P < K$ ne sont pas explorés.

**Bibliographie**

[1] RO. SCHMIDT, Multiple emitter location and signal parameter estimation, in Proc of the RADC Spectrum Estimation Workshop, Griffiths Air Force Base, New york, 1979, pp. 243-258.

[2] (MV) P. Larzabal Application du Maximum de vraisemblance au traitement d'antenne : radio-goniométrie et poursuite de cibles. PhD Thesis, Université de Paris-sud, Orsay, FR, June 1992

[3] (MV)B.Ottersten, M. Viberg, P.Stoica and A. Nehorai Exact and large sample maximum likelihood techniques for parameter estimation and detection in array processing. In S.Haykin, J.Litva and TJ.Shephers editors, Radar Array Processing, chapter 4, pages 99-151. Springer-Verlag, Berlin 1993.

[4] (SMOOTH) S. U. Pillai and B. H. Kwon, Forward/backward spatial smoothing techniques for coherent signal identification, IEEE Trans. Acoust., Speech and Signal Processing, vol. 37, pp. 8-15, Jan. 1988

[5] (SMOO-INTER) B. Friedlander and A. J. Weiss. Direction Finding using spatial smoothing with interpolated arrays. IEEE Transactions on Aerospace and Electronic Systems, Vol. 28, No. 2, pp. 574-587, 1992.

[6] (INTER)T. P. Bronez, Sector interpolation of nonuniform arrays for efficient high résolution bearing estimation, in Proc. IEEE ICASSP'88, vol. 5,p p. 2885-2888, New York, NY, Apr. 1988

[7] (MODE) Y. Bresler and A. Macovski, Exact Maximum Likelihood Parameter Estimation of Superimposed Exponential Signals in Noise, IEEE Trans. on ASSP, 34(5):1081--1089, October 1986

[8] (MODE) Stoica P, Sharman KC. Maximum likelihood methods for direction-of-arrival estimation. IEEE Transactions on Acoustics, Speech and Signal Processing, 38:1132-1143, July 1990

[9] (ESPRIT)R. Roy and T. Kailath, ESPRIT-Estimation of signal parameters via. rotational invariance techniques, IEEE Trans. Acoust. Speech, Signal Processing, Vol37, pp 984-995, july 1989.

[10] (ESPRIT)K.T. Wong and M. Zoltowski, Uni-Vector Sensor ESPRIT for Multi-Source Azimuth-Elevation Angle Estimation, Digest of the 1996 IEEE International Antennas and Propagation Symposium, Baltimore, MD, July 21-26, 1996, pp. 1368-1371.

[11] (ROOT-INTER)B. Friedlander. The Root-MUSIC algorithm for direction finding with interpolated arrays. European J. (Elsevier) Signal Processing, Vol. 30, pp. 15-29, 1993.

[12] (ROOT)K.T. Wong and M. Zoltowski, Source Localization by 2-D Root-MUSIC with "Scalar Triads" of Velocity Hydrophones, Conference Record of the Midwest Symposium on Circuits and Systems, August 18-21, 1996.

**Revendications**

**1.** Procédé pour déterminer des angles d'arrivées de sources cohérentes dans un système comprenant plusieurs capteurs quelconques, les signaux se propageant selon des trajets cohérents ou sensiblement cohérents entre une source et les dits capteurs de réception du réseau **caractérisé en ce que** l'on utilise au moins une fonction d'interpolation modale $z(\theta)^k$ omnidirectionnelle en azimut où $z(\theta) = \exp(j\theta)$ avec $\theta$ correspondant à un secteur d'angle sur lequel est effectuée l'interpolation des vecteurs directeurs **a** $(\theta)$ du réseau de capteurs pour traiter les signaux émis par les sources et reçues sur le réseau de capteurs et on applique une technique de lissage spatial pour décorréler les sources cohérentes, la fonction d'interpolation **W e**$(\theta)$ s'exprime de la manière suivante :

$$\mathbf{a}(\theta) \approx \mathbf{W}\ \mathbf{e}(\theta) \quad \text{avec} \quad \mathbf{e}(\theta) = \begin{bmatrix} z(\theta)^{-L} \\ \vdots \\ z(\theta)^{L} \end{bmatrix} = \begin{bmatrix} \exp(-jL\theta) \\ \vdots \\ \exp(jL\theta) \end{bmatrix} \text{ pour } \mathbf{0 \leq \theta < 360°}$$

la matrice **W** de dimension $N \times (2L+1)$ est obtenue en minimisant au sens des moindres carrés l'écart $\|\mathbf{a}(\theta) - \mathbf{W}\mathbf{e}(\theta)\|^2$ pour des azimuts vérifiant $0 \leq \theta < 360˚$, la longueur de l'interpolation $2L+1$ dépend de l'ouverture du réseau, **caractérisé en ce que** la fonction d'interpolation comporte plusieurs matrices d'interpolation $\mathbf{W_{i1 \ldots iP}}$ avec *P* correspondant au nombre de secteurs disjoints sur lequel s'effectue l'interpolation conjointe des signaux reçus, la détermination de la matrice ainsi que la largeur d'interpolation $\delta\theta$ de chaque secteur comprenant au moins les étapes suivantes :

**Etape n˚A.1** : $\delta\theta=180°/P$ et $\theta_{i_P}$ P $=2\delta\theta(p-1)$ pour $1 \le p \le P$

**Etape n˚A.2** : calculer la matrice d'interpolation $\mathbf{W}_{i_1...i_p}$ en minimisant au sens des moindres carrés $\|\mathbf{a}(\theta)-\mathbf{W}_{i_1...i_p}\mathbf{e}(\theta)\|^2$ pour $|\theta-\theta_{i_p}| < \delta\theta$ et $1 \le p \le P$.

**Etape n˚A.3** : calculer le critère A_dB ($\hat{\mathbf{e}}^1 (\theta),\hat{\mathbf{e}}^2 (\theta)$)

$$A\_dB(\hat{\mathbf{e}}^1(\theta),\hat{\mathbf{e}}^2(\theta)) = \max_{|\theta-\theta_{i_p}|<\delta\theta \text{ pour } 1\le p\le P, n} \left\{ 20\log_{10}\left(\left|\frac{\hat{e}_n(\theta)}{\hat{e}_{n+1}(\theta)}\right|\right)\right\}$$

$$\text{avec } \mathbf{W}_{i_1...i_P}{}^{-1}\mathbf{a}(\theta) = \begin{bmatrix} \hat{e}_1(\theta) \\ \vdots \\ \hat{e}_N(\theta) \end{bmatrix}$$

où $\delta\theta$ est la valeur minimale pour laquelle l'erreur en amplitude A_dB est inférieure à une valeur **A_dB_ref** donnée,

**Etape n˚A.4** : Si A_dB($\hat{e}^1 (\theta)$, $\hat{e}^2 (\theta)$ )>**A_dB_ref** alors faire $\delta\theta = \delta\theta /2$ et retourner à l'étape A.2

**Etape n˚A.5** : Calcul *de K* = **180**/$(P\delta\theta)$

**Etape n˚A.6** : Pour tous *P*-uplets $(i_1...i_p)$ vérifiant $0 \le i_1 \le ... \le i_P < K$ avec K le nombre de secteurs sur lesquels on effectue l'interpolation:

**Etape n˚A.6.1 :** Calcul des $\theta_{i_P} = \mathbf{2}\delta\theta \times i_p$ pour $1 \le p \le P$

**Etape n˚A.6.2 :** Calcul de la matrice d'interpolation $\mathbf{W}_{i_1...i_p}$ en minimisant au sens des moindres carrés $\|\mathbf{a}(\theta) - \mathbf{W}_{i_1...i_p}\mathbf{e}(\theta)\|^2$ pour $|\theta-\theta_{i_p}| < \delta\theta$ et $1 \le p \le P$.

**Etape n˚A.6.3 :** Retourner à l'étape n˚ **A.6.1** si tous les *P*-uplets $(i_1...i_P)$ vérifiant $1 \le i_1 \le...\le i_P \le K$ ne sont pas explorés.

2. Procédé selon la revendication 1 **caractérisé en ce que** l'on détermine la valeur de L de la manière suivante :

$$A\_dB(\mathbf{a}(\theta),\mathbf{W}\mathbf{e}(\theta)) = \max_{\theta,n}\left\{20\log_{10}\left(\left|\frac{a_n(\theta)}{\hat{a}_n(\theta)}\right|\right)\right\} \text{ avec } \mathbf{W}\,\mathbf{e}(\theta) = \begin{bmatrix} \hat{a}_1(\theta) \\ \vdots \\ \hat{a}_N(\theta) \end{bmatrix}$$

où L est la valeur minimale vérifiant A_dB inférieur à 0.1dB. En effet, A_dB est nul lorsque l'interpolation est parfaite et donc lorsque $\mathbf{a}(\theta) = \mathbf{W}\mathbf{e}(\theta)$.

3. Procédé selon la revendication 2 **caractérisé en ce que**, pour des réseaux où la longueur de l'interpolation $2L+1$ est supérieur à N, on interpole le réseau par *K* secteurs de largeur $\delta\theta = \mathbf{180}/K$ avec des matrices d'interpolation $\mathbf{W}_k$ carrés où

$$\mathbf{a}(\theta) = \mathbf{W_k}\,\mathbf{e}(\theta) \text{ avec } \mathbf{e}(\theta) = \begin{bmatrix} \exp(-jL_0\theta) \\ \vdots \\ \exp(jL_0\theta) \end{bmatrix} \text{ pour } |\theta-\theta_k| < \delta\theta$$

où les *K* matrices $\mathbf{W_k}$ sont carrées avec $N = \mathbf{2}L_0 + \mathbf{1}$,

les matrices $\mathbf{W}_k$ sont obtenues en minimisant l'écart $\|\mathbf{a}(\theta)- \mathbf{W}_k\mathbf{e}(\theta)\|^2$ au sens des moindres carrés l'écart pour $|\theta - \theta_k| < \delta\theta$,

la largeur du cône d'interpolation $\delta\theta$ est déterminée à partir du critère d'erreur en amplitude suivant :

$$A\_dB(\mathbf{a}(\theta),\mathbf{W}_k\mathbf{e}(\theta)) = \max_{\theta_k-\delta\theta\leq\theta\leq\theta_k-\delta\theta.n}\left\{20\log_{10}\left(\left|\frac{a_n(\theta)}{\hat{a}_n(\theta)}\right|\right)\right\} \text{ avec } \mathbf{W_k}\ \mathbf{e}(\theta) = \begin{bmatrix} \hat{a}_1(\theta) \\ \vdots \\ \hat{a}_N(\theta) \end{bmatrix}$$

où $\delta\theta$ est la valeur minimale vérifiant que A_dB est inférieur à 0.1dB car A_dB est nul lorsque $\mathbf{a}(\theta) = \mathbf{W}_k\mathbf{e}(\theta)$

4. Procédé selon l'une des revendications 1 à 3 **caractérisé en ce qu'**il comporte une étape de goniométrie comprenant au moins les étapes suivantes:

   **Etape n˚B.0 :** Initialisation d'un ensemble $\Theta$ à $\varnothing$
   **Etape n˚B** : Pour tous $P$-uplets $(i_1...i_P)$ vérifiant $0 \leq i_1 \leq... \leq i_P < K$ :

   **Etape n˚B.1 :** calculer $\mathbf{y}^{i1...i}{}_P(t) = W_{i_1...i_P}{}^{-1}x(t)$
   **Etape n˚B.2 :** calculer les $\theta_{i_p} = 2\delta\theta \times i_p$ pour $1 \leq p \leq P$
   **Etape n˚B.3:** appliquer une technique de lissage spatial et/ou Forward-Backward sur l'observation $\mathbf{y}^{i1...iP}$ (t) puis appliquer un algorithme de goniométrie afin d'obtenir les incidences $\hat{\theta}_k$ pour $1 \leq k \leq K_{i_1...i_P}$.
   **Etape n˚B.4 :** Sélectionner des incidences estimées $\hat{\theta}_k \in \Theta_{i_1...i_p}$ où $\Theta_{i_1...i_p} = \{ |\hat{\theta}_k - \theta_{i_P}| < \delta\theta$ pour $1 \leq p \leq P$ et $J_{MUSIC}(\hat{\theta}) < \eta$
   **Etape n˚B.5:** $\Theta = \Theta \cup \Theta_{i_1...i_p}$ ensembles des angles d'incidence vérifiant l'étape B.4 pour tous les secteurs associé aux $P$-uplets $(i_1...i_p)$ traité par l'algorithme.
   **Etape n˚B.6:** Retourner à l'étape n˚ **B.1** tant que tous les $P$-uplets $(i_1...i_P)$ vérifiant $0 \leq i_1 \leq ... \leq i_p < K$ ne sont pas explorés.

5. Procédé selon la revendication 1 **caractérisé en ce que** pour des sources cohérentes présentes dans des secteurs différents, on interpole conjointement le vecteur directeur $\mathbf{a}(\theta)$ sur plusieurs secteurs.

**Claims**

1. A process for determining incoming angles of coherent sources in a system including several sensors of any type, the signals propagating along coherent or essentially coherent paths between a source and said receiving sensors of the network, **characterised in that** at least one modal interpolation function $z(\theta)^\kappa$ omnidirectional in azimuth is used where $z(\theta) = \exp(j\theta)$, with $\theta$ corresponding to an angle sector on which interpolation of the direction vectors $\mathbf{a}(\theta)$ in the sensor network is performed to process the signals emitted by the sources and received in the sensor network and a spatial smoothing technique is applied to de-correlate the coherent sources, the interpolation function $\mathbf{W}\mathbf{e}(\theta)$ being expressed as follows:

$$a(\theta) \approx W\,e(\theta) \text{ where } e(\theta) = \begin{bmatrix} z(\theta)^{-L} \\ \vdots \\ z(\theta)^L \end{bmatrix} = \begin{bmatrix} \exp(-jL\theta) \\ \vdots \\ \exp(jL\theta) \end{bmatrix} \text{ for } 0 \leq \theta < 360^0$$

the matrix W of dimension Nx(2L+1) is obtained by minimising in the least squares sense the difference $\|\mathbf{a}(\theta) - \mathbf{we}(\theta)\|^2$ for the azimuths verifying $0 \leq \theta < 360°$, the interpolation length 2L+1 depends on the network opening, **characterised in that** the interpolation function includes several interpolation matrices $W_{i1...iP}$, with P corresponding to the number of disjointed sectors on which the joint interpolation of the received signals is performed, determining the matrix and the interpolation width $\delta\theta$ of each sector at least including the following steps:

   Step n˚ A.1: $\delta\theta = 180°/P$ and $\theta_{ip} = 2\delta\theta(p - 1)$ for $1 \leq p \leq P$
   Step n˚ A.2: calculating the interpolation matrix $W_{i1...iP}$ by minimising in the least squares sense $\|\mathbf{a}(\theta)-w_{i_1...i_p}e(\theta)\|^2$ for $|\theta-\theta_{i_p}| < \delta\theta$ and $1 \leq p \leq P$.

Step n˚ A.3: calculating the criterion A_dB ($\hat{e}^1$ (θ), $\hat{e}^2$ (θ))

$$A\_dB(\hat{e}^1(\theta),\hat{e}^2(\theta)) = \max_{\substack{|\theta-\theta_{i_p}|<\delta\theta \text{ für } 1\leq p\leq P,n}} \left\{ 20\log_{10}\left(\left\|\frac{\hat{e}_n(\theta)}{\hat{e}_{n+1}(\theta)}\right\|\right)\right\}$$

whith

$$\mathbf{W}_{i_1...i_p}^{-1}\mathbf{a}(\theta) = \begin{bmatrix} \hat{e}_1(\theta) \\ \vdots \\ \hat{e}_N(\theta) \end{bmatrix},$$

where δθ is the minimum value at which the amplitude error A_dB is below a given value **A_dB_ref.**

Step n˚ A.4: if A_dB($\hat{e}^1$(θ),$\hat{e}^2$(θ))>**A_dB_ref** then perform δθ = δθ/2 and return to step A.2.

Step n˚ A.5: calculating $K = 180/(P\delta\theta)$.

Step n˚ A.6: for all $P$-uplets ($i_1...i_p$), verifying $0 \leq i_i \leq ... \leq i_p < K$ with K being the number of sectors on which the interpolation is performed:

Step n˚ A.6.1: calculating $\theta_{ip} = 2\delta\theta \times i_p$ for $1 \leq p \leq P$.

Step n˚ A.6.2: calculating the interpolation matrix $W_{i1...iP}$ by minimising in the least squares sense $\|a(\theta)-W_{i_1...i_p}e(\theta)\|^2$ for $|\theta-\theta_{ip}|<\delta\theta$ and $1 \leq p \leq P$.

Step n˚ A.6.3: returning to step n˚ **A.6.1** if all of the P-uplets ($i_1...i_p$) verifying $1 \leq i_1 \leq ... \leq i_p < K$ are not searched.

2. The process according to claim 1, **characterised in that** the value of L is determined as follows:

$$A\_dB(\mathbf{a}(\theta), \mathbf{W}e(\theta)) = \max_{\theta,n}\left\{20\log_{10}\left(\left\|\frac{a_n(\theta)}{\hat{a}_n(\theta)}\right\|\right)\right\}$$

with $\mathbf{W}e(\theta) = \begin{bmatrix} \hat{a}_1(\theta) \\ \vdots \\ \hat{a}_N(\theta) \end{bmatrix}$

where $L$ is the minimum value verifying A_dB is below 0.1dB. In effect, A_dB is zero when the interpolation is perfect and thus when $a(\theta) = We(\theta)$.

3. The process according to claim 2, **characterised in that** for networks in which the interpolation length $2L+1$ is higher than N, the network is interpolated by $K$ sectors of width $\delta\theta = 180/K$ with squared interpolation matrices $\mathbf{W_k}$, where

$$\mathbf{a}(\theta) = \mathbf{W_k}(\theta) \text{ with } e(\theta) = \begin{bmatrix} \exp(-jL_0\theta) \\ \vdots \\ \exp(jL_0\theta) \end{bmatrix} \text{ for } |\theta-\theta_k| < \delta\theta$$

where the $K$ matrices $\mathbf{W_k}$ are squared with $N = 2L_0+1$,

the matrices $\mathbf{W_k}$ are obtained by minimising the difference $\|a(\theta)-\mathbf{W_k}e(\theta)\|^2$ in the least squares sense for $|\theta-\theta_k| < \delta\theta$,

the width of the interpolation cone δθ is determined from the following amplitude error criterion:

$$A\_dB(\mathbf{a}(\theta), \mathbf{W}_k e(\theta)) = \max_{\theta_k-\delta\theta\leq\theta\leq\theta_k-\delta\theta,n}\left\{20\log_{10}\left(\left\|\frac{a_n(\theta)}{\hat{a}_n(\theta)}\right\|\right)\right\} \text{ with } \mathbf{W_k}e(\theta) = \begin{bmatrix} \hat{a}_1(\theta) \\ \vdots \\ \hat{a}_N(\theta) \end{bmatrix}$$

where δθ is the minimum value verifying that A_dB is below 0.1dB, as A_dB is zero when $a(\theta) = \mathbf{W_k}e(\theta)$.

**4.** The process according to any one of claims 1 to 3, **characterised in that** it includes a goniometry step at least including the following steps:

Step n° B.0: initialisation of a set $\Theta$ to $\varnothing$.

Step n° B: for all of the $P$-uplets ($i_1...i_p$) verifying $0 \leq i_1 \leq ... \leq i_p < K$ :

Step n° B.1: calculating $y^{i1...ip}(t) = W_{i1...ip}^{-1}x(t)$.

Step n° B.2: calculating the $\theta_{ip} = 2\delta\theta \times i_p$ for $1 \leq p \leq P$.

Step n° B.3: applying a spatial smoothing and/or Forward-Backward technique to the observation $y^{i1...ip}(t)$ and then applying a goniometry algorithm in order to obtain the incidences $\hat{\theta}_k$ for $1 \leq k \leq K_{i1...ip}$.

Step n° B.4: selecting estimated incidences $\hat{\theta}_k \in \Theta_{i_1...i_p}$ where $\Theta_{i_1...i_p} = \{|\hat{\theta}_k - \theta_{ip}| < \delta\theta$ for $1 \leq p \leq P$ and $J_{MUSIC}(\theta) < \eta$.

Step n° B.5: $\Theta = \Theta \cup \Theta_{i_1...i_p}$ sets of angles of incidence verifying step B.4 for all of the sectors associated with $P$-uplets ($i_1...i_p$) processed by the algorithm.

Step n° B.6: returning to step n° **B.1** until all of the $P$-uplets ($i_1...i_p$) verifying $0 \leq i_1 \leq ... \leq i_p < K$ are searched.

**5.** The process according to claim 1, **characterised in that** for the coherent sources present in the different sectors, the direction vector **a** ($\theta$) is jointly interpolated on several sectors.

**Patentansprüche**

**1.** Verfahren zum Ermitteln von Ankunftswinkeln von kohärenten Quellen in einem System, das mehrere beliebige Sensoren umfasst, wobei sich die Signale über kohärente oder im Wesentlichen kohärente Bahnen zwischen einer Quelle und den Empfangssensoren des Netzes ausbreiten, **dadurch gekennzeichnet, dass** wenigstens eine modale, im Azimuth omnidirektionale Interpolationsfunktion $z(\theta)^k$ angewendet wird, wobei $z(\theta)=exp(j\theta)$, wobei $\theta$ einem Winkelsektor entspricht, auf dem die Interpolation von Richtungsvektoren a ($\theta$) des Sensornetzes durchgeführt wird, um die von den Quellen ausgesendeten und auf dem Sensornetz empfangenen Signale zu verarbeiten, und eine Raumglättungstechnik zum Entkoppeln der kohärenten Quellen angewendet wird, wobei die Interpolationsfunktion W e($\theta$) wie folgt ausgedrückt wird:

$$a(\theta) \approx \mathbf{W}\, e(\theta) \quad \text{wobei} \quad e(\theta) = \begin{bmatrix} z(\theta)^{-L} \\ \vdots \\ z(\theta)^{L} \end{bmatrix} = \begin{bmatrix} \exp(-jL\theta) \\ \vdots \\ \exp(jL\theta) \end{bmatrix} \quad \text{für} \quad 0 \leq \theta < 360°$$

wobei die Matrix W der Dimension $N \times (2L+1)$ erhalten wird, indem im Sinne der kleinsten Quadrate die Abweichung $\|a(\theta)-We(\theta)\|^2$ für Azimuthe, die $0\leq\theta<360°$ erfüllen, minimiert wird, wobei die Länge der Interpolation $2L+1$ von der Öffnung des Netzes abhängt, **dadurch gekennzeichnet, dass** die Interpolationsfunktion mehrere Interpolationsmatrizen $W_{i1...iP}$ umfasst, wobei P der Zahl der disjunkten Sektoren entspricht, an denen die konjunkte Interpolation der empfangenen Signale erfolgt, wobei die Ermittlung der Matrix sowie der Interpolationsbreite $\delta\theta$ jedes Sektors wenigstens die folgenden Schritte beinhaltet:

Schritt A.1: $\delta\theta = 180°/P$ und $\theta_{ip} = 2\delta\theta(p - 1)$ für $1 \leq p \leq P$;

Schritt A.2: Berechnen der Interpolationsmatrix $W_{i1...iP}$, indem im Sinne der kleinsten Quadrate $\|a(\theta) - W_{i_1...i_p}e(\theta)\|^2$ für $|\theta - \theta_{iP}| < \delta\theta$ und $1 \leq p \leq P$ minimiert wird;

Schritt A.3: Berechnen des Kriteriums A_dB($\hat{e}^1(\theta),\hat{e}^2(\theta)$)

$$A\_dB(\hat{e}^1(\theta),\hat{e}^2(\theta)) = \max_{|\theta-\theta_{i_p}|<\delta\theta \text{ für } 1\leq p\leq P,n} \left\{ 20\log_{10}\left(\left|\frac{\hat{e}_n(\theta)}{\hat{e}_{n+1}(\theta)}\right|\right) \right\}$$

wobei $\mathbf{W}_{i_1...i_p}{}^{-1}\mathbf{a}(\theta) = \begin{bmatrix} \hat{e}_1(\theta) \\ \vdots \\ \hat{e}_N(\theta) \end{bmatrix}$,

wobei $\delta\theta$ der kleinste Wert ist, für den der Amplitudenfehler A_dB kleiner als ein gegebener Wert A_dB_ref ist;

Schritt A.4: wenn $A\_dB(\hat{e}^1(\theta),\hat{e}^2(\theta))>A\_dB\_ref$ ist, dann $\delta\theta = \delta\theta/2$ durchführen und zu Schritt A.2 zurückkehren;
Schritt A.5: Berechnen von $K = 180/(P\delta\theta)$;
Schritt A.6: für alle P-uplets $(i_1...i_p)$, die $0 \le i_1 \le ... \le i_p < K$ erfüllen, wobei K die Zahl der Sektoren ist, an denen die Interpolation durchgeführt wird:
Schritt A.6.1: Berechnen von $\theta_{ip} = 2\delta\theta \times i_p$ für $1 \le p \le P$;
Schritt A.6.2: Berechnen der Interpolationsmatrix $W_{i1...iP}$ durch Minimieren im Sinne der kleinsten Quadrate $\|a(\theta)-W_{i_1...i_p}e(\theta)\|^2$ für $|\theta - \theta_{ip}| < \delta\theta$ und $1 \le p \le P$;
Schritt A.6.3: Zurückkehren zu Schritt A.6.1, wenn noch nicht alle P-uplets $(i_1...i_p)$ die $1 \le i_1 \le ... \le i_p < K$ erfüllen, untersucht wurden.

**2.** Verfahren nach Anspruch 1, **dadurch gekennzeichnet, dass** der Wert von L wie folgt bestimmt wird:

$$A\_dB(\mathbf{a}(\theta),\mathbf{We}(\theta)) = \max_{\theta,n}\left\{20\log_{10}\left(\left|\frac{a_n(\theta)}{\hat{a}_n(\theta)}\right|\right)\right\} \quad \text{wobei } \mathbf{W\,e}(\theta) = \begin{bmatrix} \hat{a}_1(\theta) \\ \vdots \\ \hat{a}_N(\theta) \end{bmatrix}$$

wobei L der kleinste Wert ist, der A_dB kleiner als 0,1 dB erfüllt; in der Tat ist A_dB null, wenn die Interpolation perfekt ist und somit wenn $a(\theta) = We(\theta)$.

**3.** Verfahren nach Anspruch 2, **dadurch gekennzeichnet, dass** für die Netze, bei denen die Länge der Interpolation 2L+1 größer als N ist, das Netz durch K Sektoren der Breite $\delta\theta = 180°/K$ mit quadratischen Interpolationsmatrizen Wk interpoliert wird,
wobei

$$\mathbf{a}(\theta) = \mathbf{W}_k\,\mathbf{e}(\theta) \quad \text{wobei } \mathbf{e}(\theta) = \begin{bmatrix} \exp(-jL_0\theta) \\ \vdots \\ \exp(jL_0\theta) \end{bmatrix} \quad \text{für} \quad |\theta - \theta_k| < \delta\theta$$

wobei die K Matrizen Wk quadratisch sind, wobei $N = 2L0 + 1$,
die Matrizen Wk werden erhalten, indem die Abweichung $\|a(\theta)-W_k,e(\theta)\|^2$ im Sinne der kleinsten Quadrate für $|\theta-\theta_k|<\delta\theta$ minimiert wird;
die Breite des Interpolationskonus $\delta\theta$ wird anhand des folgenden Amplitudenfehlerkriteriums bestimmt:

$$A\_dB(\mathbf{a}(\theta),\mathbf{W}_k\mathbf{e}(\theta)) = \max_{\theta_k-\delta\theta\le\theta\le\theta_k-\delta\theta,n}\left\{20\log_{10}\left(\left|\frac{a_n(\theta)}{\hat{a}_n(\theta)}\right|\right)\right\} \quad \text{wobei } \mathbf{W}_k\,\mathbf{e}(\theta) = \begin{bmatrix} \hat{a}_1(\theta) \\ \vdots \\ \hat{a}_N(\theta) \end{bmatrix}$$

wobei $\delta\theta$ der kleinste Wert ist, der A_dB kleiner als 0,1 dB erfüllt, da A_dB null ist, wenn $a(\theta) = W_k e(\theta)$.

**4.** Verfahren nach einem der Ansprüche 1 bis 3, **dadurch gekennzeichnet, dass** es einen Goniometrieschritt beinhaltet, der wenigstens die folgenden Schritte beinhaltet:

Schritt B.0: Initialisieren eines Satzes $\Theta$ bis $\varnothing$;
Schritt B: Für alle P-uplets $(i_1...i_p)$, die $0 \le i_1 \le ... \le i_p < K$ erfüllen:

Schritt B.1: Berechnen von $y^{i1...ip}(t) = W_{i1...ip}{}^{-1}x(t)$;
Schritt B.2: Berechnen der $\theta_{ip} = 2\delta\theta \times i_p$ für $1 \le p \le P$;

Schritt B.3: Anwenden einer Raumglättungs- und/oder Forward-Backward-Technik auf die Beobachtung $y^{i1...ip}$ (t), dann Anwenden eines Goniometriealgorithmus, um die $\hat{\theta}_k$ Indexe für $1 \leq k \leq K_{i1...ip}$ zu erhalten;

Schritt B.4: Auswählen der geschätzten Fälle von $\hat{\theta}_k \in \Theta_{i_1,...\ i_p}$, wobei $\Theta_{i_1...i_p} = \{ |\hat{\theta}_k - \theta_{i_p}| < \delta\theta$ für $1 \leq p \leq P$ und $J_{MUSIC} (\hat{\theta}) < \eta$

Schritt B.5: $\Theta = \Theta \cup \Theta_{i_1...i_p}$ Sätze von Einfallswinkeln, die Schritt B.4 für alle Sektoren erfüllen, die mit den P-uplets $(i_1...i_p)$ assoziiert sind, die mit dem Algorithmus bearbeitet wurden;

Schritt B.6: Zurückkehren zu Schritt B.1, solange nicht alle P-uplets $(i_1...i_p)$, die $0 \leq i_1 \leq ... \leq i_p < K$ erfüllen, untersucht wurden.

**5.** Verfahren nach Anspruch 1, **dadurch gekennzeichnet, dass** für die kohärenten Quellen, die in den verschiedenen Sektoren vorhanden sind, gemeinsam der Richtungsvektor a(θ) auf mehreren Sektoren interpoliert wird.

FIG.1

FIG.2

Source

Réseau de
capteurs

$K(\theta_{m1})$

$\theta_{m1}$

$K(\theta_{m2})$

$\theta_{m2}$

Obstacle

# FIG.3

y

$2^e$ capteur

$3^e$ capteur

$x_2$

$y_2$

A

x

$4^e$ capteur

$1^{er}$ capteur

$5^e$ capteur

R

# FIG.4

$x_{n,i}$

Vecteur de
Translation

$y_{n,i}$

$i^{\text{ième}}$ sous-réseau

$1^{\text{ier}}$ sous-réseau

## FIG.5

L (Longueur de l' interpolation)

$R/\lambda$

## FIG.6

FIG.7

FIG.8

Zone dans la matrice $W_{ij}$ est calculée

## FIG.9

$W_{jk}$

## FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. Friedlander ; A. J. Weiss.** Direction Finding using spatial smoothing with interpolated arrays. *IEEE Transactions on Aerospace and Electronic Systems,* 1992, vol. 28 (2), 574-587
- **RO. SCHMIDT.** Multiple emitter location and signal parameter estimation. *Proc of the RADC Spectrum Estimation Workshop,* 1979, 243-258
- **P. Larzabal.** Application du Maximum de vraisemblance au traitement d'antenne : radio-goniométrie et poursuite de cibles. *PhD Thesis,* Juin 1992
- Exact and large sample maximum likelihood techniques for parameter estimation and detection in array processing. **B.Ottersten ; M. Viberg ; P.Stoica ; A. Nehorai.** Radar Array Processing. Springer-Verlag, 1993, 99-151
- **S. U. Pillai ; B. H. Kwon.** Forward/backward spatial smoothing techniques for coherent signal identification. *IEEE Trans. Acoust., Speech and Signal Processing,* Janvier 1988, vol. 37, 8-15
- **T. P. Bronez.** Sector interpolation of nonuniform arrays for efficient high résolution bearing estimation. *Proc. IEEE ICASSP'88,* Avril 1988, vol. 5, 2885-2888
- **Y. Bresler ; A. Macovski.** Exact Maximum Likelihood Parameter Estimation of Superimposed Exponential Signals in Noise. *IEEE Trans. on ASSP,* Octobre 1986, vol. 34 (5), 1081-1089
- **Stoica P ; Sharman KC.** Maximum likelihood methods for direction-of-arrival estimation. *IEEE Transactions on Acoustics, Speech and Signal Processing,* Juillet 1990, vol. 38, 1132-1143
- **R. Roy ; T. Kailath.** ESPRIT-Estimation of signal parameters via. rotational invariance techniques. *IEEE Trans. Acoust. Speech, Signal Processing,* Juillet 1989, vol. 37, 984-995
- **K.T. Wong ; M. Zoltowski.** Uni-Vector Sensor ESPRIT for Multi-Source Azimuth-Elevation Angle Estimation. *Digest of the 1996 IEEE International Antennas and Propagation Symposium,* 21 Juillet 1996, 1368-1371
- **B. Friedlander.** The Root-MUSIC algorithm for direction finding with interpolated arrays. *European J. (Elsevier) Signal Processing,* 1993, vol. 30, 15-29
- **K.T. Wong ; M. Zoltowski.** Source Localization by 2-D Root-MUSIC with "Scalar Triads" of Velocity Hydrophones. *Conference Record of the Midwest Symposium on Circuits and Systems,* 18 Août 1996